# EUROPÄISCHE PATENTSCHRIFT

(11) **EP 1 738 733 B1**
(45) Veröffentlichungstag und Bekanntmachung des Hinweises auf die Patenterteilung: **21.05.2008**
(21) Anmeldenummer: 06005251.1
(22) Anmeldetag: 15.03.2006
(51) Int. Cl.: A61G 3/06, B60P 1/43

(54) **Rampe für Fahrzeuge des Personenverkehrs, insbesondere für Busse**
Ramp for vehicles, especially for buses
Rampe pour véhicules, notamment pour les autobus

(30) Priorität: 29.06.2005 DE 202005010182 U
(43) Veröffentlichungstag der Anmeldung: 03.01.2007
(73) Patentinhaber: Hübner Transportation GbmH, 34123 Kassel (DE)
(72) Erfinder: Paul, Oliver, D-34266 Niestetal (DE)
(74) Vertreter: Walther, Walther & Hinz GbR

(56) Entgegenhaltungen:
- WO-A-03/082630
- DE-U1- 20 318 186
- DE-U1-7202004 013 58

## Beschreibung

Die vorliegende Erfindung betrifft eine Rampe für Fahrzeuge des Personenverkehrs, insbesondere für Busse.

In jüngster Vergangenheit werden immer mehr Busse, und hier insbesondere Busse des Personennahverkehrs, mit Rampen ausgerüstet, um auch Rollstuhlfahrern den Zugang zu den Bussen zu ermöglichen. Der Einsatz von Rampen ist allerdings auch in Schienenfahrzeugen, insbesondere in Straßenbahnen, bekannt.

Gerade bei Bussen bestand in jüngster Zeit das Problem, dass auf Grund einer Vielzahl zusätzlicher Aggregate das Busgewicht erheblich zugenommen hat. Da die Achslast für eine Achse begrenzt ist, sind viele Bushersteller dazu übergegangen, die Achslast auf mehrere Achsen, insbesondere auf zwei Hinterachsen, zu verteilen. Solche mehrachsigen Busse sind teuer, so dass man bemüht ist, das Gewicht des Busses möglichst niedrig zu halten. Insbesondere bei Straßenbahnen, aber auch bei Trolleybussen, also solchen Bussen, die elektrisch angetrieben sind, besteht darüber hinaus das Problem, dass sämtliche Aggregate oder Bauteile nicht so ausgebildet oder auch so eingebaut sind, dass sie leitend sind. Insofern würde sich hier der Einsatz von Rampen aus Aluminium oder Stahl verbieten. Ganz abgesehen davon weisen diese Werkstoffe per se ein nicht unerhebliches Gewicht auf. DE 20318186 U offenbart eine Rampe mit einer Klappbar angeordneten Rampenplatte, welche von einer im Boden eines Fahrzeugs angeordneten Rampenwanne aufnehmbar ist.

Der Erfindung liegt daher die Aufgabe zu Grunde, eine Rampe für Fahrzeuge des Personenverkehrs, und hier insbesondere für Busse, zu schaffen, die einerseits ein geringes Eigengewicht aufweist und andererseits nicht leitend ausgebildet ist.

Die Aufgabe wird erfindungsgemäß dadurch gelöst, dass die Rampe eine Rampenplatte umfasst, die klappbar von einer im Boden eines Fahrzeugs einbaubaren Rampenwanne aufnehmbar ist. Die Rampenwanne ist einteilig und aus Kunststoff ausgebildet. Einteilig ist hierbei in dem Sinne zu verstehen, dass die Rampenwanne aus einem einzigen Teil besteht, die als solches in dem Boden des Fahrzeugs einbaubar ist. Durch die Verwendung von Kunststoff als Werkstoff wird erreicht, dass die Wanne zum einen nicht leitend ist, und zum anderen ein geringes Eigengewicht aufweist.

Wie bereits an anderer Stelle erläutert, dient eine solche Rampe als Zugangsmöglichkeit für Rollstuhlfahrer.

Um nun sicherzustellen, dass eine solche Rampe das Gewicht eines Rollstuhlfahrers samt Rollstuhl aufnehmen kann ohne Schaden zu nehmen, ist in Bezug auf den Boden der Rampenwanne eine zusätzliche Verstärkungseinlage in Form einer Fasermatte vorgesehen. Eine solche Verstärkungseinlage im Boden der Wanne ist insbesondere von Vorteil, wenn man davon ausgeht, dass der Boden der Wanne nicht vollflächig auf dem Chassis des Fahrzeugs aufliegt, sondern eine entsprechende Bodenöffnung überspannt, so dass bei der erfindungsgemäßen Konstruktion nicht mehr die Problematik des Reißens oder Brechens des Wannenbodens besteht.

Um des Weiteren nach Möglichkeit zu verhindern, dass Wasser oder Schmutz bei zugeklappter Rampenplatte in die Rampenwanne gelangt, ist eine Dichtleiste auf dem Wannenrand vorgesehen, an der die Rampenplatte anliegt. Diese Dichtleiste ist im Einzelnen auf einer zum Zentrum des Wannenkörpers hin zulaufenden Schräge angeordnet, so dass tatsächlich auch eine Dichtwirkung zu dem Wannenkörper hin entsteht. Der Einsatz von mehreren Dichtungen, die jeweils umlaufend an dem U-förmigen Rand angeordnet sind, ist ebenfalls Gegenstand der Erfindung.

Zur klappbaren Befestigung der Rampenplatte an der Rampenwanne ist ein Scharnierband vorgesehen. Hierbei weist der eine Teil des Scharnierbandes einen im Querschnitt U-förmigen Aufnahmekörper für die Rampenplatte auf, wobei die Rampenplatte durch den U-förmigen Aufnahmekörper klammerartig erfasst wird. Hierdurch wird eine sichere und auch stabile Verbindung zwischen Rampenplatte und Scharnierband sichergestellt. Der andere Teil des Scharnierbandes ist als Steg ausgebildet und mit der Rampenwanne beispielsweise durch eine Schraub- oder Nietverbindung verbunden und gegebenenfalls zusätzlich noch verklebt.

Auch die Rampenplatte besteht vorteilhaft aus einem nicht leitfähigen, leichten aber stabilen Material, z. B. einem Faserverbundwerkstoff oder auch einer Kunststoffplatte.

Um den sicheren Einbau in den Boden des Busses zu ermöglichen, weist der Wannenkörper im Bereich des Scharnierbandes zu beiden Seiten einen leistenförmigen Fortsatz auf. Dieser zu beiden Seiten des Wannenkörpers angeordnete leistenförmige Fortsatz ist nach dem Einbau der Rampe integraler Bestandteil des Fahrzeugbodens.

Anhand der Zeichnungen wird die Erfindung nachstehend beispielhaft näher erläutert.

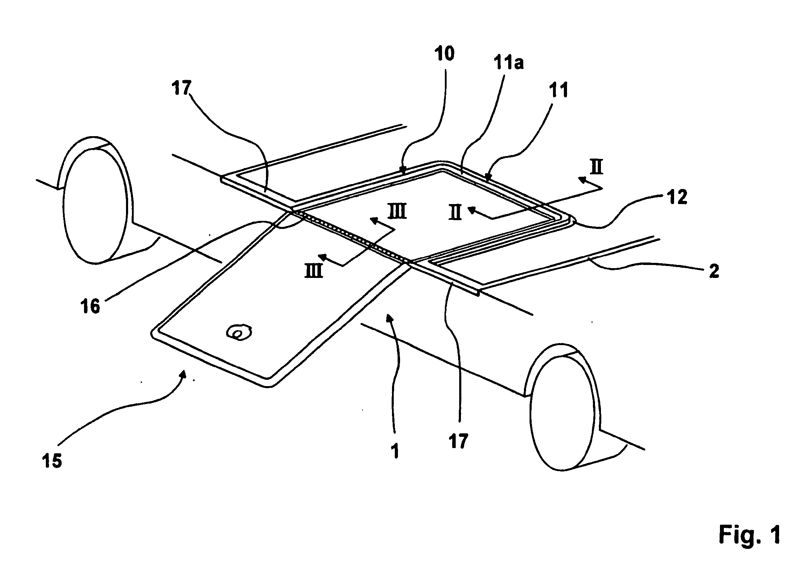

- Figur 1: zeigt die erfindungsgemäße Rampe im aufgeklappten Zustand, wobei das Chassis eines Busses lediglich angedeutet ist;
- Figur 2: zeigt einen Schnitt gemäß der Linie II - II aus Figur 1, wobei die Rampe in Figur 2 im zusammengeklappten Zustand dargestellt ist;
- Figur 3: zeigt einen Schnitt gemäß der Linie III - III durch das Scharnierband, wobei hierbei ebenfalls die Rampe im zusammengeklappten Zustand dargestellt ist.

Die insgesamt mit 1 bezeichnete Rampe lagert in dem Boden 2 des mit 3 bezeichneten Buschassis. Die Rampe besteht aus der Rampenwanne 10 und der Rampenplatte 15. Die Rampenplatte ist mit der Rampenwanne 10 durch das Scharnierband 16 verbunden. Die Rampenwanne 10 zeigt darüber hinaus zu beiden Seiten des Scharnierbands leistenförmige Fortsätze 17, die schlussendlich der sicheren Fixierung der Rampenwanne im Boden 2 des Buschassis 3 dienen. Die Rampenwanne 10 besitzt einen Wannenrand 11, wobei der Wannenrand 11 zum Zentrum des Wannenkörpers zu eine Schräge 11a aufweist. Nach außen hin, d. h. in Richtung auf den Boden des Fahrzeugs zu, ist ein umlaufender Bund 12 vorgesehen, der ebenfalls der Fixierung der Rampenwanne im Boden des Fahrzeugs dient.

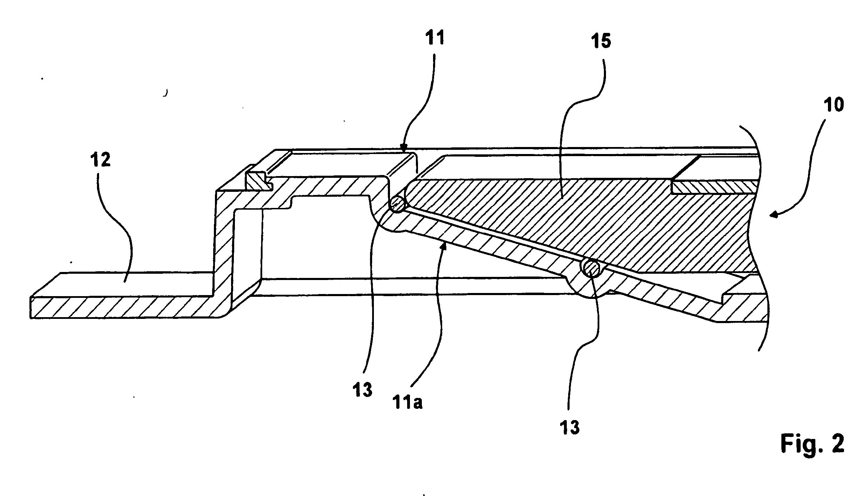

Wie sich insbesondere aus Figur 2 ergibt, sind im Bereich der Schräge 11a zwei umlaufende Dichtungen in Form von O-Ringen 13 vorgesehen, die dafür sorgen, dass weder Schmutz noch Feuchtigkeit in das Innere der Rampenwanne, also in den Bereich zwischen Rampenwanne und Rampenplatte gelangt.

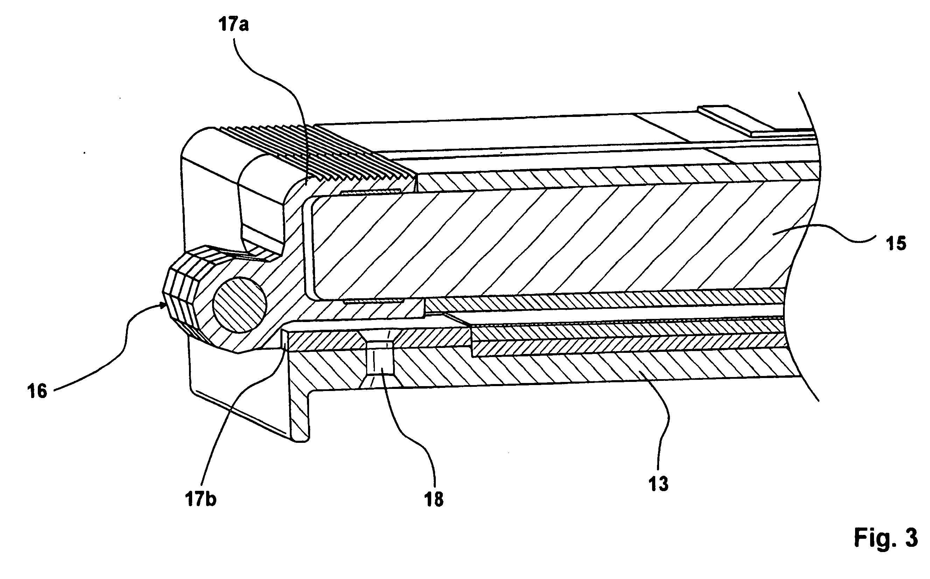

Die Anbindung der Rampenplatte 15 an der Rampenwanne 10 mit Hilfe des Scharnierbandes 16 ergibt sich insbesondere aus Figur 3. So ist aus Figur 3 erkennbar, dass das Scharnierband 16 einen Teil aufweist, der einen im Querschnitt U-förmigen Aufnahmekörper 17a besitzt, durch den klammerförmig die Rampenplatte 15 erfasst wird. Der andere Teil des Scharnierbandes, der als Steg 17b ausgebildet ist, ist mit Hilfe von Schrauben 18 mit der Rampenwanne 10 verbunden.

Wesentlich ist, dass die Rampenwanne und die Rampenplatte jeweils aus Kunststoff oder einem anderen leichten, aber dennoch stabilen und elektrisch nicht leitfähigem Material hergestellt sind, z. B. einem faserverstärkten Kunststoff. Insbesondere die Rampenwanne ist hierbei als GFK-Nasspressteil oder als Harz-Injektionsteil herstellbar.

## Patentansprüche

1. Rampe (1) für Fahrzeuge des Personenverkehrs, insbesondere Busse, wobei die Rampe eine Rampenplatte (15) umfasst, die klappbar von einer im Boden eines Fahrzeugs einbaubaren Rampenwanne (10) aufnehmbar ist, wobei die Rampenwanne (10) einteilig und aus Kunststoff ausgebildet ist.

2. Rampe (1) nach Anspruch 1,
**dadurch gekennzeichnet,**
**dass** der Boden (2) der Rampenwanne (10) eine zusätzliche Verstärkungseinlage z. B. eine Faserverstärkungseinlage, aufweist.

3. Rampe (1) nach einem der voranstehenden Ansprüche,
**dadurch gekennzeichnet,**
**dass** der Wannenrand (11) zur Anlage an die Rampenplatte (15) eine Dichtleiste (13) aufweist.

4. Rampe (1) nach einem der voranstehenden Ansprüche,
**dadurch gekennzeichnet,**
**dass** der Wannenrand (11) eine zum Zentrum des Wannenkörpers (10) hin zulaufende Schräge (11a) aufweist.

5. Rampe (1) nach einem der voranstehenden Ansprüche,
**dadurch gekennzeichnet,**
**dass** die Rampenplatte (15) mit dem Wannenkörper (10) durch ein Scharnierband (16) verbunden ist.

6. Rampe (1) nach einem der voranstehenden Ansprüche,
**dadurch gekennzeichnet,**
**dass** der eine Teil des Scharnierbandes (16) einen im Querschnitt U-förmigen Aufnahmekörper (17a) für die Rampenplatte (15) aufweist.

7. Rampe (1) nach einem der voranstehenden Ansprüche,
**dadurch gekennzeichnet,**
**dass** der andere Teil des Scharnierbandes (16) als Steg (17b) ausgebildet ist, der mit der Rampenwanne (10) verbindbar ist.

8. Rampe (1) nach einem der voranstehenden Ansprüche,
**dadurch gekennzeichnet,**
**dass** die Rampenplatte (15) aus einem nicht leitfähigen, leichten aber stabilen Material, z. B. einem Faserverbundwerkstoff, ausgebildet ist.

9. Rampe (1) nach einem der voranstehenden Ansprüche,
**dadurch gekennzeichnet,**
**dass** die Rampenwanne (10) im Bereich des Scharnierbandes (16) zu beiden Seiten einen leistenförmigen Fortsatz (17) zur Anbringung am Boden (2) des Fahrzeugs aufweist.

## Claims

1. A ramp (1) for passenger vehicles, more specifically for busses, said ramp including a fold-away ramp plate (15) that is received in a ramp trough (10) adapted for mounting in the floor of a vehicle, said ramp trough (10) being made from one piece of plastic material.

2. The ramp (1) as set forth in claim 1,
**characterized in**
**that** the floor (2) of the ramp trough (10) has an additional reinforcement insert, e.g., a fiber reinforced insert.

3. The ramp (1) as set forth in any one of the afore mentioned claims,
**characterized in**
**that** the trough edge (11) has a sealing strip (13) for the ramp plate (15) to abut.

4. The ramp (1) as set forth in any one of the afore mentioned claims,
**characterized in**
**that** the trough edge (11) has an inclined surface (11a) sloping toward the center of the trough body (10).

5. The ramp (1) as set forth in any one of the afore mentioned claims,
**characterized in**
**that** the ramp plate (15) is connected to the trough body (10) through a strap hinge (16).

6. The ramp (1) as set forth in any one of the afore mentioned claims,
**characterized in**
**that** the one part of the strap hinge (16) has a receiving body (17a) that is U-shaped in cross section and receives the ramp plate (15).

7. The ramp (1) as set forth in any one of the afore mentioned claims,
**characterized in**
**that** the other part of the strap hinge (16) is configured to be a web (17b) for connection to the ramp trough (10).

8. The ramp (1) as set forth in any one of the afore mentioned claims,
**characterized in**
**that** the ramp plate (15) is made from a non conductive, light but robust material, e.g., from a fiber composite material.

9. The ramp (1) as set forth in any one of the afore mentioned claims,
**characterized in**
**that** the ramp trough (10) has, on either side in the region of the strap hinge (16), a strip-shaped extended portion (17) for attachment to the floor (2) of the vehicle.

## Revendications

1. Rampe (1) pour véhicules de transport public, notamment pour bus, du type comprenant une palette (15) rabattable destinée à être reçue par une cassette (10) apte à être montée dans le plancher d'un véhicule, la cassette (10) de la rampe étant réalisée d'une seule pièce en matière plastique.

2. Rampe (1) selon la revendication 1,
**caractérisée en ce**
**que** le plancher (2) de la cassette (10) de la rampe comporte un insert de renfort supplémentaire, un insert de renfort de fibres par exemple.

3. Rampe (1) selon l'une quelconque des revendications précédentes,
**caractérisée en ce**
**que** le rebord (11) de la cassette comporte une baguette d'étanchéité (13) lui permettant de venir en appui contre la palette (15) de la rampe.

4. Rampe (1) selon l'une quelconque des revendications précédentes,
**caractérisée en ce**
**que** le rebord (11) de la cassette comporte une surface (11a) inclinée vers le centre du corps de la cassette (10).

5. Rampe (1) selon l'une quelconque des revendications précédentes,
**caractérisée en ce**
**que** la plaque (15) de la rampe est reliée au corps (10) de la cassette par une lame de charnière (16).

6. Rampe (1) selon l'une quelconque des revendications précédentes,
**caractérisée en ce**
**que** l'une des parties de la lame de charnière (16) comporte un corps de réception (17a) de section en U pour la plaque (15) de la rampe.

7. Rampe (1) selon l'une quelconque des revendications précédentes,
**caractérisée en ce**
**que** l'autre partie de la lame de charnière (16) est réalisée sous forme de languette (17b), cette languette étant apte à être reliée à la cassette (10) de la rampe.

8. Rampe (1) selon l'une quelconque des revendications précédentes,
**caractérisée en ce**
**que** la palette (15) de la rampe est réalisée en un matériau non conducteur, léger mais solide, p. ex. un matériau composite renforcé par des fibres.

9. Rampe (1) selon l'une quelconque des revendications précédentes,
**caractérisée en ce**
**que** la cassette (10) de la rampe comporte de part et d'autre, à la hauteur de la lame de charnière (16), une extension (17) en forme de baguette destinée à assurer la fixation de celle-ci sur le plancher (2) du véhicule.
